# EUROPEAN PATENT APPLICATION

(11) **EP 4 468 429 A1**
(43) Date of publication of application: **27.11.2024**
(21) Application number: 23865794.4
(22) Date of filing: 08.09.2023
(51) Int. Cl.: H01M 10/04, B65H 3/08

(54) **BATTERY CELL EXTRACTION DEVICE**

(30) Priority: 14.09.2022 KR 20220115414
(71) Applicant: LG Energy Solution, Ltd., Seoul 07335 (KR)
(72) Inventor: HWANG, Seung Jin, Daejeon 34122 (KR); LEE, Jin Soo, Daejeon 34122 (KR); BAEK, Ju Hwan, Daejeon 34122 (KR); HONG, Seok In, Daejeon 34122 (KR); KANG, Tae Yeop, Daejeon 34122 (KR); YOON, Seong Jae, Daejeon 34122 (KR)
(74) Representative: Goddar, Heinz J.
(86) International application number: PCT/KR2023/013470
(87) International publication number: WO 2024/058496

(57) **Abstract**

A battery cell extraction device according to one example of the present invention comprises an adsorption part provided to be movable toward a battery cell stored in a tray, and provided to adsorb a first surface of the battery cell, and a guide part provided to be movable so that in a state where the first surface of the battery cell is adsorbed by the adsorption part, a second surface in a direction opposite to the first surface of the battery cell is supported, and including a plurality of elastic members disposed to contact the second surface of the battery cell.

## Description

### Technical Field

The present invention relates to a battery cell extraction device for stably extracting battery cells stored in a tray and transferring the extracted battery cells to a next process, and a control method thereof.

This application claims the benefit of priority based on Korean Patent Application No. 10-2022-0115414 dated September 14, 2022, the disclosure of which is incorporated herein by reference in its entirety.

### Background Art

Secondary batteries can be classified into rectangular secondary batteries, cylindrical secondary batteries, pouch-type secondary batteries, and the like.

Recently, pouch-type secondary batteries with a simple structure and a high electrical capacity per unit volume tend to be widely used.

The pouch-type secondary battery comprises battery cells, a pouch surrounding the battery cells, and an electrolyte contained within the pouch. The battery cell has a structure in which a plurality of electrodes (positive electrodes, negative electrodes) and a plurality of separators are alternately laminated.

Meanwhile, during the manufacturing process of thew pouch-type secondary battery, once the manufacturing of the battery cell is completed, a pouch packaging process of inserting the battery cell into the pouch is performed.

At this time, the battery cell, in which the separators and the electrodes are laminated, in a state of being stored in a tray, is extracted from the tray by a separate extraction device, and then transferred to the pouch.

Conventionally, the battery cell stored in a tray is extracted by a vacuum adsorption pad. The battery cell is extracted from the tray with its upper surface adsorbed by the vacuum adsorption pad, and is transferred to an assembly process for pouch packaging in a state where the first surface is continuously adsorbed by the vacuum adsorption pad.

Meanwhile, if the battery cell taken out from the tray has a high weight, there is a problem that in the process of extracting the battery cell using the vacuum adsorption pad, the upper separator, upper electrode, or upper tab of the battery cell is damaged due to the weight of the battery cell.

Therefore, when the battery cell stored in the tray is extracted to the outside, there is a need to develop a battery cell extraction device capable of minimizing damage to the battery cell, and a control method thereof.

### Disclosure

### Technical Problem

When a battery cell stored in a tray is extracted, it is a problem to be solved by the present invention to provide a battery cell extraction device capable of minimizing damage occurred in the battery cell, and a control method thereof.

### Technical Solution

To solve the above problem, a battery cell extraction device according to one example of the present invention comprises an adsorption part provided to be movable toward a battery cell stored in a tray, and provided to adsorb a first surface of the battery cell, and a guide part provided to be movable so that in a state where the first surface of the battery cell is adsorbed by the adsorption part, a second surface in a direction opposite to the first surface of the battery cell is supported, and including a plurality of elastic members disposed to contact the second surface of the battery cell.

Also, the adsorption part may be provided to adsorb at least two points on the first surface of the battery cell, respectively, and the guide part may comprise a pair of elastic members disposed to support at least two points on the second surface of the battery cell, respectively.

In addition, the adsorption part may comprise a pair of support frames provided to be movable closer to or away from the tray, and adsorption pads provided at the lower ends of the respective support frames and provided to adsorb the first surface of the battery cell.

Furthermore, the adsorption part may be provided to adsorb inner side regions located at the inner side rather than edge regions of the first surface of the battery cell, and the guide part may be provided to support edge regions of the second surface of the battery cell.

Also, it may be provided so that the gap between adjacent adsorption pads is smaller than the gap between the pair of elastic members.

In addition, the guide part may further comprise a pair of guide frames provided to move toward the battery cell adsorbed by the adsorption part. Furthermore, in each guide frame, a bent part bent at a predetermined angle so that the battery cell is seated may be formed, where each bent part may be provided with an elastic member.

Also, the guide part may be provided to be raised and lowered toward the tray, and may be provided to move in a direction closer to the battery cell adsorbed by the adsorption part.

In addition, the guide part may be provided so that the pair of guide frames moves in a direction closer to or away from each other.

Furthermore, the bent part may be bent and formed toward the battery cell to form an angle of less than 90 degrees with the guide frame.

As one example, the elastic member may comprise a spring.

Also, the elastic member may comprise silicone or rubber.

In addition, the battery cell extraction device may further comprise a control part for controlling movements of the adsorption part and the guide part.

Furthermore, the control part may be provided so that it moves the adsorption part downward closer to the tray, and then causes the first surface of the battery cell to be adsorbed by the adsorption part, and moves the adsorption part adsorbing the first surface of the battery cell upward in a direction away from the tray.

Also, the control part may be provided so that when the battery cell is separated from the tray by the adsorption part, it moves the guide part closer to the battery cell and lowers the adsorption part adsorbing the first surface of the battery cell, thereby contacting the second surface of the battery cell with the elastic member of the guide part.

In addition, the battery cell extraction device may further comprise a first driving part provided to lower or raise the adsorption part and the guide part closer to or away from the tray, a second driving part for raising the adsorption part away from the tray in a state where the first surface of the battery cell is adsorbed by the adsorption part, and a third driving part for moving the guide part toward the battery cell when the battery cell is separated from the tray.

Furthermore, each driving part may comprise a motor or cylinder.

### Advantageous Effects

As discussed above, the battery cell extraction device related to one example of the present invention, and the control method thereof have the following effects.

Upon the battery cell extraction, it is possible to transfer the battery cell in a state where the upper and lower surfaces of the battery cell are supported together.

Also, the upper surface of the battery cell is adsorbed and supported using the adsorption part and the lower surface of the battery cell is supported using the guide part, so that it is possible to stably extract the battery cell from the tray regardless of the weight of the battery cell.

In addition, it is possible to prevent damage to the battery cell by elastically supporting the lower surface of the battery cell.

### Description of Drawings

Figure 1 is a diagram schematically showing a battery cell extraction device related to one example of the present invention.
Figure 2 is a configuration diagram schematically showing a battery cell extraction device according to one example of the present invention.
Figures 3 to 6 are diagrams for explaining operating states of the battery cell extraction device shown in Figure 1.

### Mode for Invention

Hereinafter, a battery cell extraction device according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

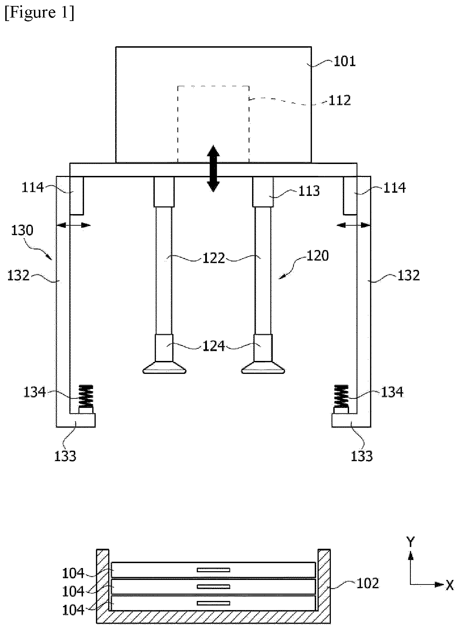

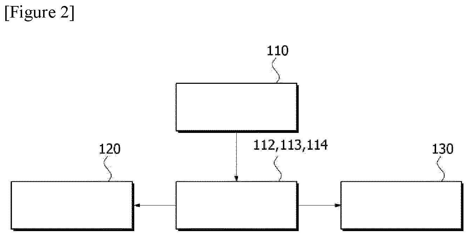

Figure 1 is a diagram schematically showing a battery cell extraction device (100) related to one example of the present invention, and Figure 2 is a configuration diagram schematically showing a battery cell extraction device according to one example of the present invention.

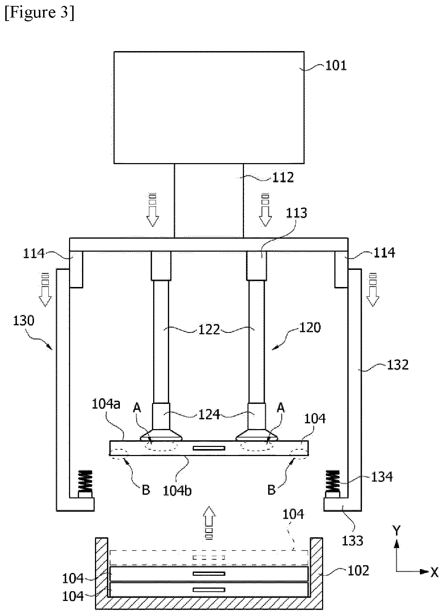

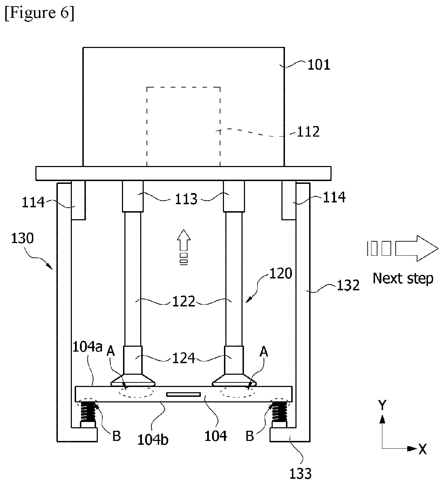

Also, Figures 3 to 6 are diagrams for explaining operating states of the battery cell extraction device shown in Figure 1.

The battery cell extraction device (100) according to one example of the present invention can be used in a pouch packaging process among the manufacturing processes of secondary batteries.

As one example, the battery cell extraction device (100) is a device extracting a battery cell (104) from a tray (102) in which a plurality of battery cells (104) is stacked and stored, and then transferring it to a next process.

Also, as described above, the battery cell (104) may be manufactured by laminating a plurality of electrodes (positive electrodes, negative electrodes), and separators.

In addition, the battery cell extraction device (100) transfers the battery cell (104) to a next process for accommodating the battery cell (104) extracted from the tray (102) inside a pouch. In the next process, the battery cell (104) is accommodated inside the pouch, where a process of injecting an electrolyte into the pouch may be performed.

Referring to Figures 1 and 2, the battery cell extraction device (100) related to one example of the present invention comprises an adsorption part (120) provided to be movable toward the battery cell (104) stored in the tray (102), and provided to adsorb a first surface (104a, also referred to as an 'upper surface') of the battery cell (104).

In addition, the battery cell extraction device (100) comprises a guide part (130) provided to be movable so that a second surface (104b) in the opposite direction of the first surface (104a) of the battery cell (104) is supported in a state where the first surface (104a) of the battery cell (104) is adsorbed by the adsorption part (120). The guide part (130) comprises a plurality of elastic members (134) disposed to contact the second surface (104b) of the battery cell (104).

The X-axis direction shown in Figures 1 and 3 to 6 indicates a direction where the guide part (130) moves toward the battery cell (104), that is, a forward movement and backward movement direction of the guide part (130), and the Y-axis direction indicates a movement direction where the adsorption part (120) and the guide part (130) rise and descend toward the tray (102).

Referring to Figures 1 and 2, the battery cell extraction device (100) according to one example of the present invention may comprise an adsorption part (120) adsorbing a first surface of the battery cell (104), a guide part (130) for supporting a second surface (104b) of the battery cell (104) in a state where the first surface (104a) is adsorbed by the adsorption part (120), and a control part (110) for controlling movements and operations of the adsorption part (120) and the guide part (130).

Here, the first surface (104a) of the battery cell (104) may be the upper surface, and the second surface (104b) may be the lower surface. The battery cell (104) is stored inside the tray (102) so that the first surface (104a), which is the upper surface, is exposed to the outside of the tray (102). The battery cell extraction device (100) is provided to extract the battery cell (104) disposed at the top inside the tray (102) to the outside of the tray (102).

The tray (102) may be a case for storing the battery cell (104), and may have a size capable of storing a plurality of battery cells (104).

The battery cell extraction device (100) may comprise a base part (101) on which the adsorption part (120) and the guide part (130) are movably mounted. That is, the base part (101) may be the device main body for driving the adsorption part (120) and the guide part (130).

In addition, the base part (101) may be located on the upper side of the tray (102) where the plurality of battery cells (104) is stored.

As one example, the base part (101) may be installed in a main mechanism part for performing a packaging process packaging the battery cell (104) and the electrolyte in the pouch, and including an activation process and a gas removal process, and the like.

The base part (101) may be provided to be movable in one direction (e.g., X-axis direction) with respect to the main mechanism part. Accordingly, the base part (101) may transfer the battery cell (104), in which the first surface (104a) and the second surface (104b) are supported by the adsorption part (120) and the guide part (130), respectively, to the next process.

Meanwhile, the tray (102) in which the plurality of battery cells (104) is stored is located on the lower side of the base part (101).

In this instance, since the battery cell (104) is stored in the tray (102) so that the first surface (104a) thereof is exposed to the outside of the tray (102), the operation of extracting the battery cell (104) from the tray (102) by the adsorption part (120) and the guide part (130) may be easily performed, and the extraction device (100) may sequentially extracting the battery cells (104) located at the top inside the tray (102) to transfer them to the next process.

In addition, the adsorption part (120) is provided to adsorb the first surface (104a), which is the upper surface of the battery cell (104). The adsorption part (120) is connected to the base part (101), and the adsorption part (120) moves (descends) closer to the tray (102) from the base part (101) to adsorb the top battery cell (104) stored in the tray (102).

As one example, the adsorption part (120) comprises a pair of support frames (122) provided to movable closer to or away from the tray (102), and adsorption pads (124) provided at the lower ends of the respective support frames (122), and provided to adsorb the first surface (104a) of the battery cell (104).

Each support frame (122) is connected to the base part (101), and is provided to be capable of moving (descending) closer to the tray (102) from the base part (101).

The adsorption pad (124) is provided on the lower side of the support frame (122), and is provided to adsorb the first surface (104a) of the battery cell (104) by vacuum.

At this time, in the adsorption pad (124), one side that the adsorption is achieved may be formed flat to easily adsorb the first surface (104a) of the battery cell (104).

Also, the adsorption pad (124) may adsorb the battery cell (104) in a vacuum adsorption manner, which may be connected to a vacuum generation part.

In addition, the support frame (122) of the adsorption part (120) is provided as a pair at a predetermined distance from each other to stably adsorb and support the first surface (104a) of the battery cell (104).

The pair of support frames (122) is connected to the base part (101), and is provided to adsorb at least two points (A portions) of the first surface (104a) of the battery cell (104), respectively, by being disposed at a predetermined distance from each other.

In this way, as the pair of adsorption parts (120) is disposed at a predetermined interval, the first surface (104a) of the battery cell (104) may be stably adsorbed and supported.

The adsorption part (120) descends in a direction closer to the tray (102) from the base part (101) to adsorb the first surface (104a) of the battery cell (104). Also, after the adsorption pad (124) adsorbs the first surface (104a) of the battery cell (104), the adsorption part (120) rises in a direction away from the tray (102).

The guide part (130) is provided to support the second surface (104b) in the opposite direction of the first surface (104a) of the battery cell (104) in a state where the first surface (104a) is adsorbed by the adsorption part (120).

In addition, the adsorption part (120) may be provided to adsorb at least two points (A) of the first surface (104a) of the battery cell (104), respectively, and the guide part (130) may comprise a pair of elastic members (134) disposed to support at least two points (B) of the second surface (104b) of the battery cell (104).

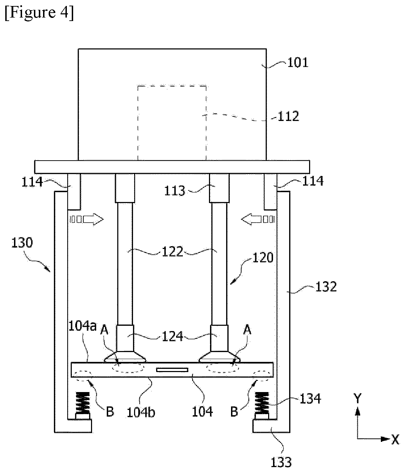

Referring to Figures 3 and 4, the guide part (130) is connected to the base part (101), and is provided to be capable of moving (descending) toward the tray (102) together with the adsorption part (120). In addition, the guide part (130) is provided to be movable closer to the battery cell (104).

The guide part (130) may comprise a pair of guide frames (132) provided to move toward the battery cell (104) adsorbed by the adsorption part (120).

In each guide frame (132), a bent part (133) bent at a predetermined angle so that the battery cell (104) is seated may be formed, where each bent part (133) may be provided with an elastic member (134). Each guide frame (132) may be provided with an elastic member (134).

In addition, the guide frame (132) and the elastic member (134) may be provided as a pair disposed at a predetermined distance from each other with respect to the base part (101).

The guide part (130) is advanced toward the battery cell (104) to support the second surface (104b) of the battery cell (104) on which the first surface (104a) is adsorbed by the adsorption part (120).

Also, the guide part (130) may be provided to be raised and lowered toward the tray (102), and may be provided to move in a direction closer to the battery cell (104) adsorbed by the adsorption part (120).

In addition, the guide part (130) may be provided so that the pair of guide frames (132) moves in a direction closer to or away from each other. That is, the guide part (130) may be provided so that the gap between the pair of guide frames (132) is adjusted. Specifically, when the gap between the pair of guide frames (132) increases, the guide part (130) becomes away from the battery cell (104) (also called 'backward movement'), and when the gap between the pair of guide frames (132) decreases, the guide part (130) becomes closer to the battery cell (104) (also called 'forward movement').

Also, referring to Figure 3, when the adsorption part (120) is lowered in a direction closer to the tray (102) from the base part (101) to adsorb the first surface (104a) of the battery cell (104), the gap between the pair of guide frames (132) may be larger than the width (length in the X-axis direction) of the battery cell (104) or the width (length in the X-axis direction) of the tray (102). In such a structure, the guide part (130) may be located at the outside of the tray (102) without entering the inside of the tray (102), and only the adsorption part (120) may enter the inside of the tray (102).

In addition, referring to Figure 4, when the battery cell (104) is separated from the tray (102) by the adsorption part (120) and the gap between the pair of guide frames (132) becomes smaller, the guide part (130) becomes closer to the battery cell (104). That is, when the guide part (130) is moved toward the battery cell (104) and thus the bent part (133) is located on the lower side of the battery cell (104), the guide part (130) is in a state in no contact with the second surface (104b) of the battery cell (104).

In each guide frame (132), the bent part (133) is positioned at the edge of the second surface (104b) of the extracted battery cell (104).

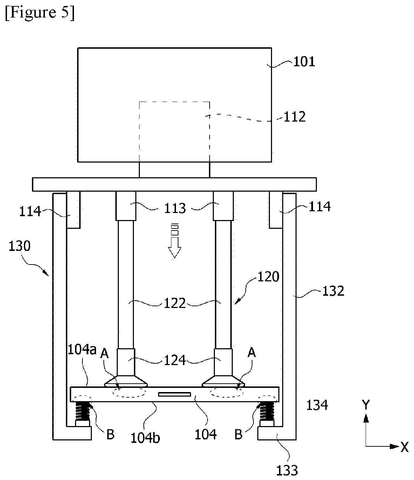

Referring to Figure 5, when the guide part (130) is located on the lower side of the battery cell (104), the adsorption part (120) adsorbing the first surface (104a) of the battery cell (104) descends again closer to the tray (102). Specifically, the adsorption part (120) descends toward the bent part (133), where the guide part (130) does not move up and down, and only the adsorption part (120) may descend toward the bent part (133).

As the second surface (104b) of the battery cell (104) is in contact with the elastic member (134) of the guide part (130) by the lowering of the adsorption part (120), the second surface (104b) of the battery cell (104) is supported by this guide part (130).

The guide frame (132) and the elastic member (134) may also be provided as a pair, and may be disposed at a predetermined distance from each other. In this way, the second surface (104b) of the battery cell (104) is stably supported by the guide part (130) including the pairs of guide frames (132) and elastic members (134).

The guide frame (132) may be provided to descend closer to the tray (102) from the base part (101), may be provided to rise away from the tray (102), and may be provided to be movable toward the battery cell (104) forward and backward.

Also, the bent part (133) may be bent and formed toward the battery cell (104) to form an angle of less than 90 degrees with the guide frame (132).

Referring to Figure 5, when the second surface (104b) of the battery cell (104) and the guide part (130) contact, each elastic member (134) prevents damage to the battery cell (104) by the guide part (130).

The elastic members (134) may be provided as a pair to be spaced apart from each other at a predetermined distance. The pair of elastic members (134) may support at least two points (B portions) of the second surface (104b) of the battery cell (104), respectively.

The elastic member (134) may comprise a spring, and the elastic member may comprise silicone or rubber.

The elastic member (134) may be provided in the form of an elastic adsorption pad, spring, and the like, but is not necessarily limited thereto.

In addition, the elastic member (134) may also be made of a soft material such as silicone or rubber to prevent damage to the battery cell (104) in a process of contacting the battery cell (104).

The adsorption part (120) may be provided to be positioned between the pair of guide frames (132). Specifically, the pair of support frames (122) may be provided to be positioned between the pair of guide frames (132) so that the first surface (104a) and the second surface (104b) of the battery cell (104) are stably supported by the adsorption part (120) and the guide part (130).

Referring to Figure 5, the adsorption part (120) may be provided to adsorb inner side regions (two A regions on the first surface of the battery cell) located at the inner side rather than edge regions of the first surface (104a) of the battery cell, and the guide part (130) may be provided to support edge regions (two B regions of the second surface of the battery cell) of the second surface (104b) of the battery cell.

For example, it may be provided so that the gap between adjacent adsorption pads (124) is smaller than the gap between the pair of elastic members (134).

The battery cell extraction device (100) may comprise a control part (110) for controlling movements of the adsorption part (120) and the guide part (130).

The control part (110) is connected to the adsorption part (120) and the guide part (130), respectively, which may control the movements and operations of the adsorption part (120) and the guide part (130) with respect to the base part (101).

Referring to Figure 3, the control part (110) may be provided so that it moves the adsorption part (120) downward closer to the tray (102), and then causes the first surface (104a) of the battery cell (104) to be adsorbed by the adsorption part (120), and moves the adsorption part (120) adsorbing the first surface (104a) of the battery cell (104) upward in a direction away from the tray (102).

Referring to Figure 4, when the battery cell (104) is separated from the tray (102) by the adsorption part (120), the control part (110) may move the guide part closer to the battery cell (104). That is, the control part (110) may move each guide frame (132) closer to the battery cell (104) so that the gap between the pair of guide frames (132) decreases.

Referring to Figure 5, the control part (110) may be provided to contact the second surface (104b) of the battery cell (104) with the elastic member (134) of the guide part (130) by lowering the adsorption part (120) adsorbing the first surface (104a) of the battery cell (104).

The control part (110) may be connected to a plurality of driving parts (112, 113, 114) for driving the adsorption part (120) and the guide part (130). The control part (110) is provided to control each driving part (112, 113, 114).

The battery cell extraction device (100) may comprise a first driving part (112) provided so that the adsorption part (120) and the guide part (130) are lowered or raised to be closer to or away from the tray (102).

In addition, the battery cell extraction device (100) may comprise a second driving part (113) for raising the adsorption part (120) in a direction away from the tray (102) in a state where the first surface of the battery cell is adsorbed by the adsorption part (120).

The first driving part (112) may be provided to integrally move the adsorption part (120) and the guide part (130) connected to the base part (101) upward and downward, and the second driving part (112) may be provided to individually move the adsorption part (120) upward and downward.

In addition, the battery cell extraction device (100) may comprise a third driving part (114) for moving the guide part (130) toward the battery cell (104) when the battery cell (104) is separated from the tray (102).

At this time, each driving part (112, 113, 114) may comprise a motor or cylinder.

Specifically, in a state of being connected to the base part (101), the first driving part (112) may lower the adsorption part (120) and the guide part (130) from the base part (101) toward the tray (102), or may raise them in a direction away from the tray (102).

For example, the first driving part (112) may be provided as a servo motor, but is not necessarily limited thereto. In addition, the first driving part (112) may be provided as an electric servomotor, air servomotor, hydraulic servomotor, and the like, depending on the supplied power source.

In addition, the second driving part (113) may also be provided as a multi-stage cylinder to adjust the raising and lowering height of the adsorption part (120) with respect to the tray (102), and the third driving part (114) may also be provided as a chuck cylinder.

Hereinafter, with reference to Figures 3 to 6, a method of controlling the battery cell extraction device (100) according to one example of the present invention will be briefly described.

First, the first surface (104a) of the battery cell (104) is adsorbed by the adsorption part (120).

In this instance, the adsorption part (120) descends from the base part (101) closer to the tray (102) where the battery cell (104) is stored to vacuum-adsorb the first surface (104a) of the battery cell (104).

Thereafter, referring to Figure 3, the adsorption part (120) rises in a direction away from the tray (102) in a state of adsorbing the first surface (104a) of the battery cell (104).

Referring to Figure 4, the guide part (130) is moved in a direction closer to the battery cell (104) on which the first surface (104a) is adsorbed by the adsorption part (120). In this instance, the guide part (130) is moved toward the battery cell (104), whereby the bent part (133) is located on the lower side of the battery cell (104), and the guide part (130) is in a state in no contact with the second surface (104b) of the battery cell (104).

Referring to Figure 5, the adsorption part (120) is lowered closer to the tray (102) in a state of adsorbing the first surface (104a) of the battery cell (104). At this time, when the adsorption part (120) is lowered closer to the tray (102), and lowered to a position where the battery cell (104) contacts the guide part (130), the second surface (104b) of the battery cell (104) is supported by the guide part (130) in a state in contact with the elastic member (134) of the guide part (130).

In this instance, since the bent part (133) of the guide part (130) is provided with the elastic member (134), the second surface (104b) of the battery cell (104) is stably supported by the elastic member (134) without damage.

Finally, the battery cell (104) is transferred to the next process.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the battery cell extraction device related to one example of the present invention and the control method thereof, upon the battery cell extraction, the battery cell can be stably transferred in a state of supporting the upper and lower surfaces of the battery cell together.

## Claims

1. A battery cell extraction device comprising:
an adsorption part provided to be movable toward a battery cell stored in a tray, and provided to adsorb a first surface of the battery cell; and
a guide part provided to be movable so that in a state where the first surface of the battery cell is adsorbed by the adsorption part, a second surface in a direction opposite to the first surface of the battery cell is supported, and including a plurality of elastic members disposed to contact the second surface of the battery cell.

2. The battery cell extraction device according to claim 1, wherein
the adsorption part is provided to adsorb at least two points on the first surface of the battery cell, respectively, and
the guide part comprises a pair of elastic members disposed to support at least two points on the second surface of the battery cell, respectively.

3. The battery cell extraction device according to claim 2, wherein
the adsorption part comprises: a pair of support frames provided to be movable closer to or away from the tray; and
adsorption pads provided at the lower ends of the respective support frames and provided to adsorb the first surface of the battery cell.

4. The battery cell extraction device according to claim 3, wherein
the adsorption part is provided to adsorb inner side regions located at the inner side rather than edge regions of the first surface of the battery cell, and
the guide part is provided to support edge regions of the second surface of the battery cell.

5. The battery cell extraction device according to claim 3, wherein
the gap between adjacent adsorption pads is smaller than the gap between the pair of elastic members.

6. The battery cell extraction device according to claim 2, wherein
the guide part further comprises a pair of guide frames provided to move toward the battery cell adsorbed by the adsorption part, and
in each guide frame, a bent part bent at a predetermined angle so that the battery cell is seated is formed, where
each bent part is provided with an elastic member.

7. The battery cell extraction device according to claim 6, wherein
the guide part is provided to be raised and lowered toward the tray, and is provided to move in a direction closer to the battery cell adsorbed by the adsorption part.

8. The battery cell extraction device according to claim 7, wherein
the guide part is provided so that the pair of guide frames moves in a direction closer to or away from each other.

9. The battery cell extraction device according to claim 6, wherein
the bent part is bent and formed toward the battery cell to form an angle of less than 90 degrees with the guide frame.

10. The battery cell extraction device according to claim 1, wherein
the elastic member comprises a spring.

11. The battery cell extraction device according to claim 1, wherein
the elastic member comprises silicone or rubber.

12. The battery cell extraction device according to claim 1, further comprising
a control part for controlling movements of the adsorption part and the guide part, wherein
the control part is provided so that it moves the adsorption part downward closer to the tray, and then causes the first surface of the battery cell to be adsorbed by the adsorption part, and
moves the adsorption part adsorbing the first surface of the battery cell upward in a direction away from the tray.

13. The battery cell extraction device according to claim 12, wherein
the control part is provided so that when the battery cell is separated from the tray by the adsorption part, it moves the guide part closer to the battery cell and
lowers the adsorption part adsorbing the first surface of the battery cell, thereby contacting the second surface of the battery cell with the elastic member of the guide part.

14. The battery cell extraction device according to claim 12, further comprising:
a first driving part provided to lower or raise the adsorption part and the guide part closer to or away from the tray;
a second driving part for raising the adsorption part away from the tray in a state where the first surface of the battery cell is adsorbed by the adsorption part; and
a third driving part for moving the guide part toward the battery cell when the battery cell is separated from the tray.

15. The battery cell extraction device according to claim 14, wherein
each driving part comprises a motor or cylinder.
